# EUROPÄISCHE PATENTSCHRIFT

(11) **EP 4 320 377 B1**
(45) Veröffentlichungstag und Bekanntmachung des Hinweises auf die Patenterteilung: **07.05.2025**
(21) Anmeldenummer: 22714800.4
(22) Anmeldetag: 14.03.2022
(51) Int. Cl.: F17C 5/00, G01L 27/00

(54) **VERFAHREN ZUR BETANKUNG EINES VERKEHRSMITTELS DURCH EINE WASSERSTOFF-BETANKUNGSEINRICHTUNG**
METHOD FOR FUELLING A MEANS OF TRANSPORTATION USING A HYDROGEN FUELLING DEVICE
PROCÉDÉ DE RAVITAILLEMENT EN CARBURANT D'UN MOYEN DE TRANSPORT À L'AIDE D'UN DISPOSITIF DE RAVITAILLEMENT EN HYDROGÈNE

(30) Priorität: 06.04.2021 DE 102021203385
(43) Veröffentlichungstag der Anmeldung: 14.02.2024
(73) Patentinhaber: Robert Bosch GmbH, 70442 Stuttgart (DE)
(72) Erfinder: KEMMER, Helerson, 71665 Vaihingen (DE)
(86) Internationale Anmeldenummer: PCT/EP2022/056525
(87) Internationale Veröffentlichungsnummer: WO 2022/214272

(56) Entgegenhaltungen:
- EP-A1- 2 602 752
- US-A1- 2018 292 284
- US-A1- 2020 411 886

## Beschreibung

Die vorliegende Erfindung betrifft ein Verfahren zur Betankung eines Verkehrsmittels durch eine Wasserstoff-Betankungseinrichtung und ein System zur Betankung eines Verkehrsmittels durch eine Wasserstoff-Betankungseinrichtung.

### Stand der Technik

Der Stand der Technik beim Betanken von einen Wasserstofftank aufweisenden Fahrzeugen mit Wasserstoff ist unter anderem in SAE J2601 beschrieben. Hier wird etwa dargelegt, dass im Falle einer Kommunikation zwischen dem Fahrzeug und einer Betankungseinrichtung vom Fahrzeug vor dem Tankvorgang einmalig eine Tabelle übermittelt wird, die einen Zieldruck für den Betankungsvorgang in Abhängigkeit von Umgebungstemperatur und Ausgangsdruck im Wasserstofftank vor dem Betankungsvorgang enthält. Die Betankungseinrichtung kann beispielsweise hieraus einen Betankungsplan ermitteln und ausführen. Die in einem Brennstoffzellensystem oder einer Peripherie angeordneten Sensoren unterliegen fertigungs- bzw. lebensdauerbedingten Toleranzen. Bei komplexen Systemen, wie etwa dem Brennstoffzellensystem, kann eine ungünstige Toleranzkette zu Mängeln in der Funktion führen. Das Dokument US 2020/411886 A1 zeigt ein Betankungsverfahren nach dem Stand der Technik und es offenbart, dass die Betankungsvorrichtung beim Betanken die Messwerte von Drucksensoren verschiedener Fahrzeuge abspeichert, um diese mit den Messwerten der Drucksensoren der Betankungsvorrichtung zu vergleichen.

### Offenbarung der Erfindung

In Verkehrsmitteln, die mit Wasserstoff betrieben werden, beispielsweise mittels eines Brennstoffzellensystems, wäre ein präziser Drucksensor zum Erfassen eines Drucks in einem Wasserstofftank zur Reduktion der Toleranzkette sinnvoll.

Es ist eine Aufgabe der Erfindung ein Verfahren zu schaffen, das die Genauigkeit eines solchen Drucksensors verbessert.

Die Aufgabe wird durch ein Verfahren zur Betankung eines Verkehrsmittels durch eine Wasserstoff-Betankungseinrichtung gelöst. Vorteilhafte Ausführungsformen und Weiterbildungen sind den Unteransprüchen und der nachfolgenden Beschreibung zu entnehmen.

Es wird ein Verfahren zur Betankung eines Verkehrsmittels durch eine Wasserstoff-Betankungseinrichtung vorgeschlagen, aufweisend die Schritte des Aufbauens einer Kommunikationsverbindung zwischen der Wasserstoff-Betankungseinrichtung und dem Verkehrsmittel, des Koppelns einer Wasserstoffabgabeeinrichtung mit einem Tank des Verkehrsmittels und Betanken des Verkehrsmittels, des Erfassens eines ersten Wasserstoffdrucks eines durch die Wasserstoffabgabeeinrichtung abgegebenen Wasserstoffstroms in der Betankungseinrichtung beim Betanken, des Erfassens eines zweiten Wasserstoffdrucks des empfangenen Wasserstoffstroms und/oder des Tanks in dem Verkehrsmittel beim Betanken, des Ermittelns einer Abweichung zwischen dem ersten Wasserstoffdruck und dem zweiten Wasserstoffdruck, und des Änderns einer Sensorkennlinie in dem Verkehrsmittel zur Korrektur der Erfassung des zweiten Wasserstoffdrucks, falls die Abweichung einen Schwellenwert überschreitet.

Das Aufbauen einer Kommunikationsverbindung kann beispielsweise das Verbinden des Verkehrsmittels mit der Wasserstoff-Betankungseinrichtung über ein drahtloses Netzwerk oder eine andere Funkverbindung umfassen. Es ist vorstellbar, dass die Wasserstoff-Betankungseinrichtung hierzu über eine Infrastruktur verfügt oder mit dieser gekoppelt ist, die eine Datenverbindung zwischen dem Verkehrsmittel und der Wasserstoff-Betankungseinrichtung erlaubt. Besonders hervorzuheben sind drahtlose Verbindungen, mit denen Berührungen zwischen der Wasserstoff-Betankungseinrichtung und dem Verkehrsmittel verhindert werden. Insbesondere metallische Kontakte sind zu vermeiden, da diese in der Nähe wasserstoffführender Einrichtungen bei Funkenbildung zu einer Explosionsgefahr führen. Die Kommunikationsverbindung ist bevorzugt bidirektional, sodass während des Betankungsvorgangs Daten und Parameter in beide Richtungen übertragbar sind.

Das Koppeln einer Wasserstoffabgabeeinrichtung mit einem Tank kann das Öffnen eines Tankdeckels und das Ankoppeln eines Tankrüssels umfassen. Es ist vorstellbar, dass beim Öffnen des Tankdeckels und/oder beim Einstecken des Tankrüssels die Datenverbindung aufgebaut wird. Alternativ dazu kann diese zu dem Zeitpunkt jedoch bereits aufgebaut sein.

Brennstoffzellensysteme können mindestens einen zweiten Drucksensor im Hochdruckbereich, etwa an oder in der Nähe des Tanks aufweisen. Während der Betankung kann eine Steuereinheit, die mit dem zweiten Drucksensor gekoppelt ist, mit der Betankungseinrichtung kommunizieren. Da die Betankungseinrichtung den Druck während der Betankung misst, kann dieser Wert mit der Druckmessung auf der Verkehrsmittelseite ausgetauscht und abgeglichen werden. Dadurch könnte eine übermäßige Abweichung einer Druckmessung durch den zweiten Drucksensor derart korrigiert werden, dass ein Korrekturwert, ein Korrekturterm oder mehrere Korrekturwerte in dem betreffenden zweiten Drucksensor oder der Steuereinheit hinterlegt und bei der Ausgabe des zweiten Wasserstoffdrucks berücksichtigt wird. Damit wird folglich die Sensorkennlinie angepasst und es werden präzisere Messwerte generiert.

Es ist denkbar, dieses Verfahren einmalig oder mehrmalig bei jedem Betankungsvorgang durchzuführen. Bei der mehrmaligen Ausführung könnten unterschiedliche Varianten hierfür in Betracht kommen, die weiter nachfolgend ausgeführt sind. Neben der Reduktion der Toleranzkette in der Regelung von Brennstoffzellensystemen kann auch der Wartungsaufwand reduziert werden. Grundsätzlich könnten eingesetzte Sensoren kostengünstiger realisiert werden, da sie bei Betankungsvorgängen kalibriert bzw. angepasst werden können. Das Abdriften von Sensorsignalen über die Lebensdauer kann durch das erfindungsgemäße Verfahren kompensiert werden.

In einer vorteilhaften Ausführungsform wird das das Erfassen des ersten und zweiten Wasserstoffdrucks einmalig nach Aufnahme der Betankung durchgeführt. Das Ermitteln der Abweichung sowie gegebenenfalls das Ändern der Sensorkennlinie könnte etwa zu Beginn des Betankungsvorgangs erfolgen. Nach Einsetzen eines stabilen Wasserstoffstroms könnte in der Betankungseinrichtung und dem Verkehrsmittel jeweils der Wasserstoffdruck erfasst werden. Es ist allerdings auch denkbar, dass das Ermitteln der Abweichung erst nach einer gewissen Zeit durchgeführt wird, nachdem eine vorbestimmte Zeitspanne ein stabiler Wasserstoffstrom abgegeben wurde. Auch kurz vor Beendigung des Betankungsvorgangs könnte dieser Verfahrensschritt ausgeführt werden.

Es ist indes bevorzugt, das Erfassen des ersten und zweiten Wasserstoffdrucks und das Ermitteln der Abweichung mehrmalig durchzuführen. Es könnten etwa mehrere Wasserstoffdruckwerte zu verschiedenen Zeiten erfasst werden, welche dann miteinander verglichen werden. Dadurch könnten einzelne Messungen untereinander gestützt und einer Plausibilitätsuntersuchung unterzogen werden. Das beiderseitige Erfassen der Wasserstoffdrücke muss nicht zwangsläufig vollkommen synchron erfolgen. Es ist denkbar, dass in der Betankungseinrichtung und in dem Verkehrsmittel nach einem vorgegebenen Muster Wasserstoffdrücke erfasst und mit einem Zeitstempel versehen abgespeichert werden, welche dann anschließend verglichen werden. Sie können sukzessive oder gleichzeitig übertragen bzw. aufgenommen werden, um sie ad hoc oder nach dem Betankungsvorgang gesammelt zu vergleichen. Die mit den einzelnen Messwerten verknüpften Zeitstempel erlauben die Zuordnung der einzelnen, beiderseitig erfassten Messwerte.

Das Ermitteln der Abweichung und/oder das Erfassen des ersten und zweiten Wasserstoffdrucks könnte etwa nach Ablaufen einer vorbestimmten Wartezeit wiederholt werden. Insbesondere das Erfassen der Wasserstoffdrücke könnte in regelmäßigen oder unregelmäßigen Zeitintervallen bzw. einem vorgegebenen zeitlichen Muster durchgeführt werden.

Das Ermitteln der Abweichung und/oder das Erfassen des ersten und zweiten Wasserstoffdrucks könnte auch nach Durchlaufen einer vorbestimmten Druckänderungshöhe wiederholt werden. Bei der Betankung könnten mehrere Druckstufen durchlaufen werden, welche etwa in einem Betankungsplan angegeben sind. Beim Erreichen bestimmter Druckstufen könnte eine beiderseitige Erfassung der Wasserstoffdrücke durchgeführt werden, wobei einer oder mehrere der Messwerte miteinander verglichen werden.

Besonders vorteilhaft wird der zweite Wasserstoffdruck von dem Verkehrsmittel an die Betankungseinrichtung übertragen, wobei die Betankungseinrichtung die Abweichung ermittelt. Es kann davon ausgegangen werden, dass der Drucksensor in der Betankungseinrichtung genauer als der Drucksensor in dem Verkehrsmittel ist, da die Betankungseinrichtung eine präzise Steuerung eines Betankungsvorgangs durchführt. Die Erfassung des ersten Wasserstoffdrucks könnte daher bereits während des Betankungsvorgangs ohnehin kontinuierlich durchgeführt werden, sodass das Aufnehmen des zweiten Wasserstoffdrucks und der Vergleich lediglich eine geringe Modifikation eines Softwareprogramms in der Betankungseinrichtung erfordert und die notwendigen Mittel bereits vorhanden sein könnten. Die Betankungseinrichtung könnte bei Feststellung einer nicht tolerierbaren Abweichung der Wasserstoffdrücke ein entsprechendes Signal an das Verkehrsmittel senden, welches bordseitig umgesetzt werden könnte.

Alternativ dazu könnte selbstverständlich auch das Verkehrsmittel dazu ausgebildet sein, die Abweichung zu ermitteln. Die Betankungseinrichtung kann die erfassten ersten Wasserstoffdruckwerte an das Verkehrsmittel übertragen, wo dann die Abweichung ermittelt wird, um hieraus die Sensorkennlinie anzupassen.

In einer vorteilhaften Ausführungsform umfasst das Verfahren das Ausgeben eines Warnsignals, falls die Abweichung einen zweiten Schwellenwert überschreitet, der höher ist als der erste Schwellenwert. Der zweite Schwellenwert könnte derart definiert werden, dass ein Überschreiten dessen als Sensordefekt interpretiert werden müsste. Das Warnsignal kann folglich als Wartungshinweis verstanden werden, der an das Verkehrsmittel übertragen und dort auf eine vorbestimmte Art behandelt wird. Es kann sinnvoll sein, den Betankungsvorgang nach Ausgeben eines Warnsignals so fortzuführen, dass ein sicherer Arbeitsmodus eingenommen wird.

Besonders vorteilhaft ist, wenn das Ermitteln der Abweichung und das Ändern der Sensorkennlinie nach dem Betankungsvorgang erfolgen Es können dann mehrere Wasserstoffdrücke erfasst und verglichen worden sein, aus denen jeweils unterschiedliche Abweichungen und umfassendere Änderungsparameter ermittelbar sind. Als abschließenden Schritt am Ende oder nach dem Betankungsvorgang könnte die Sensorkennlinie angepasst werden.

Das Verfahren kann weiter den Schritt des Berechnens oder Schätzens eines Druckverlusts zwischen der Betankungseinrichtung und dem Verkehrsmittel, d.h. dem darin angeordneten Tank, umfassen. Der Druckverlust könnte in der zweiten Steuereinheit modelliert bzw. abgelegt, oder von der Betankungseinrichtung am Anfang der Betankung ermittelt oder übertragen werden.

Das Verkehrsmittel und/oder die Betankungseinrichtung könnten dazu ausgebildet sein, das Verfahren bei jedem Betankungsvorgang durchzuführen. Eine Sensorkennlinie in dem Verkehrsmittel ist dann stets adaptiert.

Analog dazu betrifft die Erfindung ferner ein System zur Betankung eines Verkehrsmittels mit Wasserstoff, aufweisend eine Betankungseinrichtung mit einer Wasserstoffabgabeeinrichtung, einer ersten Verbindungseinheit, einem ersten Drucksensor und einer ersten Steuereinheit, eine zweite Verbindungseinheit und eine zweite Steuereinheit zur Integration in ein Verkehrsmittel, wobei der erste Drucksensor mit der ersten Steuereinheit gekoppelt ist und zum Erfassen eines ersten Wasserstoffdrucks eines durch die Wasserstoffabgabeeinrichtung abgegebenen Wasserstoffstroms ausgebildet ist, wobei die zweite Steuereinheit dazu ausgebildet ist, einen von einem zweiten Drucksensor in dem Verkehrsmittel erfassten zweiten Wasserstoffdruck des Wasserstoffstroms und/oder eines Tanks in dem Verkehrsmittel aufzunehmen, und wobei eine der ersten Steuereinheit und der zweiten Steuereinheit dazu ausgebildet ist, eine Abweichung zwischen dem ersten Wasserstoffdruck und dem zweiten Wasserstoffdruck zu ermitteln und eine Sensorkennlinie in dem Verkehrsmittel zur Korrektur der Erfassung des zweiten Wasserstoffdrucks zu ändern, falls die Abweichung einen ersten Schwellenwert überschreitet.

Ferner kann die eine der ersten Steuereinheit und der zweiten Steuereinheit dazu ausgebildet sein, ein Warnsignal auszugeben, falls die Abweichung einen zweiten Schwellenwert überschreitet, der höher ist als der erste Schwellenwert.

Das System bzw. die darin enthaltenen Komponenten sind überdies dazu ausgebildet, einen, mehrere oder beliebige der vorangehend dargestellten Verfahrensschritte auszuführen.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 eine schematische Darstellung des Systems zur Betankung eines Verkehrsmittels.
Figur 2 eine schematische Darstellung des erfindungsgemäßen Verfahrens zur Betankung eines Verkehrsmittels.

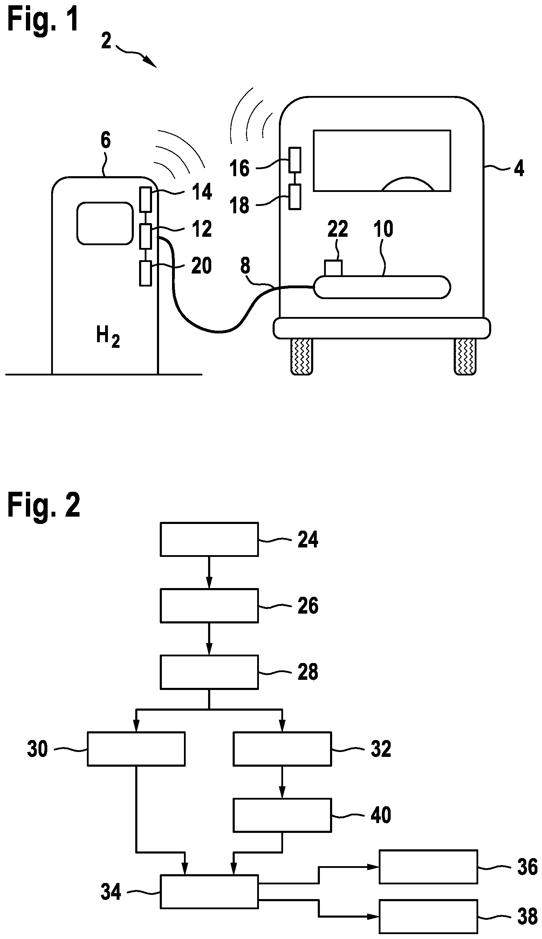

Figur 1 zeigt schematisch ein System 2 zum Betanken eines Verkehrsmittels 4. Das Verkehrsmittel 4 ist in dem gezeigten Fall beispielhaft ein Bus, in dem Wasserstoff über eine Brennstoffzelle (nicht gezeigt) zur Erzeugung von elektrischem Strom genutzt wird. Das System 2 weist eine Wasserstoff-Betankungseinrichtung 6 auf, die einen Tankrüssel 8 als Wasserstoffabgabeeinrichtung besitzt. Dieser ist mit dem Verkehrsmittel 4 koppelbar, um in eine Fluidverbindung mit einem Tank 10 im Innern des Verkehrsmittels 4 zu geraten. Die Wasserstoff-Betankungseinrichtung 6 weist weiterhin eine erste Steuereinheit 12 auf, welche mit einer ersten Verbindungseinheit 14 verbunden ist.

Die erste Verbindungseinheit 14 ist in der Lage, mit einer zweiten Verbindungseinheit 16 des Verkehrsmittels 4 zu kommunizieren. Dies kann entweder direkt, d.h. als Punkt-zu-Punkt-Verbindung, oder über eine entsprechende Infrastruktur erfolgen. Die zweite Verbindungseinheit 16 ist mit einer zweiten Steuereinheit 18 gekoppelt. Folglich können die erste Steuereinheit 12 und die zweite Steuereinheit 18 miteinander kommunizieren.

Die Betankungseinrichtung 6 weist einen ersten Drucksensor 20 auf, der mit der ersten Steuereinheit 12 gekoppelt ist und dazu ausgebildet ist, einen ersten Wasserstoffdruck eines Wasserstoffmassenstroms zu erfassen, der in den Tankrüssel 8 geleitet wird. In dem Verkehrsmittel 4 ist korrespondierend dazu ein zweiter Drucksensor 22 vorgesehen, der mit dem Tank 10 und der zweiten Steuereinheit 18 gekoppelt ist und dazu ausgebildet ist, einen zweiten Wasserstoffdruck zu erfassen. Dieser steigt bei der Betankung durch die Betankungseinrichtung 6 an. Aufgrund des Druckgleichgewichts entspricht der erste Wasserstoffdruck dem zweiten Wasserstoffdruck. Folglich sind im Idealfall die Messwerte des ersten Drucksensors 20 und des zweiten Drucksensors 22 identisch. Aufgrund von Alterung und Verschleiß kann insbesondere der zweite Drucksensor 22 zunehmend unpräzise werden. Eine der ersten Steuereinheit 12 und der zweiten Steuereinheit 18 ist dazu ausgebildet, eine Abweichung zwischen dem ersten Wasserstoffdruck und dem zweiten Wasserstoffdruck zu ermitteln und eine Sensorkennlinie in dem Verkehrsmittel 4 zur Korrektur der Erfassung des zweiten Wasserstoffdrucks zu ändern, falls die Abweichung einen ersten Schwellenwert überschreitet. Dadurch wird die Präzision des zweiten Drucksensors 22 verbessert und Sensorfehler kompensiert. Ferner kann die eine der ersten Steuereinheit 12 und der zweiten Steuereinheit 18 dazu ausgebildet sein, ein Warnsignal auszugeben, falls die Abweichung einen zweiten Schwellenwert überschreitet, der höher ist als der erste Schwellenwert. Dies ist besonders bei extremen Abweichungen sinnvoll.

Fig. 2 zeigt ein Verfahren zur Betankung des Verkehrsmittels 4 durch die Wasserstoff-Betankungseinrichtung 6. Das Verfahren weist die Schritte des Aufbauens 24 einer Kommunikationsverbindung zwischen der Wasserstoff-Betankungseinrichtung 6 und dem Verkehrsmittel 4, des Koppelns 26 der Wasserstoffabgabeeinrichtung 8 mit dem Tank 10 des Verkehrsmittels 4 und des Betankens 28 des Verkehrsmittels auf. Während des Betankens wird ein erster Wasserstoffdruck eines durch die Wasserstoffabgabeeinrichtung 8 abgegebenen Wasserstoffstroms in der Betankungseinrichtung 6 erfasst 30. Gleichzeitig, davor oder danach wird in dem Verkehrsmittel ein zweiter Wasserstoffdruck erfasst 32. Eine Abweichung zwischen dem ersten Wasserstoffdruck und dem zweiten Wasserstoffdruck wird ermittelt 34. Überschreitet die Abweichung einen ersten Schwellenwert, wird eine Sensorkennlinie in dem Verkehrsmittel 4 zur Korrektur der Erfassung des zweiten Wasserstoffdrucks geändert 36. Überschreitet die Abweichung einen zweiten Schwellenwert, wird zudem ein Warnsignal ausgegeben 38. Der zweite Schwellenwert übersteigt dabei den ersten Schwellenwert und könnte beispielsweise doppelt so groß, dreimal so groß oder größer sein.

Das Erfassen 30 bzw. 32 kann mehrmalig erfolgen. Die erfassten zweiten Wasserstoffdrücke können zudem an die Betankungseinrichtung 6 übertragen werden 40, um dort die Abweichung zu ermitteln. Es ist denkbar, unabhängig voneinander und mehrmals die Wasserstoffdrücke zu erfassen, beispielsweise in bestimmten zeitlichen Abständen, nach Durchlaufen von bestimmten Druckstufen oder in anderen Mustern. Die zweiten Wasserstoffdruckwerte können direkt nach der jeweiligen Erfassung an die Betankungseinrichtung 6 übertragen werden oder gesammelt nach dem Betankungsvorgang. Zur eindeutigen Identifizierung der jeweiligen Erfassungszeit werden die einzelnen Wasserstoffdruckwerte exemplarisch jeweils mit einem Zeitstempel versehen. Die in der Betankungseinrichtung 6 erfassten ersten Wasserstoffdruckwerte können ebenso mit Zeitstempeln versehen werden. Bei synchroner Messung oder beim Durchlaufen diskreter Druckniveaus während des Betankens können folglich die einzelnen Druckwerte miteinander verglichen werden.

## Patentansprüche

1. Verfahren zur Betankung eines Verkehrsmittels (4) durch eine Wasserstoff-Betankungseinrichtung (6), aufweisend die Schritte:
- Aufbauen (24) einer Kommunikationsverbindung zwischen der Wasserstoff-Betankungseinrichtung (6) und dem Verkehrsmittel (4),
- Koppeln (26) einer Wasserstoffabgabeeinrichtung (8) mit einem Tank (10) des Verkehrsmittels (4) und Betanken des Verkehrsmittels (4),
- Erfassen (30) eines ersten Wasserstoffdrucks eines durch die Wasserstoffabgabeeinrichtung (8) abgegebenen Wasserstoffstroms in der Betankungseinrichtung (6) beim Betanken (28),
- Erfassen (32) eines zweiten Wasserstoffdrucks des empfangenen Wasserstoffstroms und/oder des Tanks (10) in dem Verkehrsmittel (4) beim Betanken (28),
- Ermitteln (34) einer Abweichung zwischen dem ersten Wasserstoffdruck und dem zweiten Wasserstoffdruck, und
- Ändern (36) einer Sensorkennlinie in dem Verkehrsmittel (4) zur Korrektur der Erfassung des zweiten Wasserstoffdrucks, falls die Abweichung einen ersten Schwellenwert überschreitet.

2. Verfahren nach Anspruch 1,
wobei das Erfassen (30, 32) des ersten und zweiten Wasserstoffdrucks einmalig nach Aufnahme der Betankung (28) durchgeführt wird.

3. Verfahren nach Anspruch 1,
wobei das Erfassen (30, 32) des ersten und zweiten Wasserstoffdrucks und das Ermitteln (34) der Abweichung mehrmalig durchgeführt wird.

4. Verfahren nach Anspruch 3,
wobei das Ermitteln (34) der Abweichung und/oder das Erfassen (30, 32) des ersten und zweiten Wasserstoffdrucks nach Ablaufen einer vorbestimmten Wartezeit wiederholt wird.

5. Verfahren nach Anspruch 3 oder 4,
wobei das Ermitteln (34) der Abweichung nach Durchlaufen einer vorbestimmten Druckänderungshöhe wiederholt wird.

6. Verfahren nach einem der vorhergehenden Ansprüche,
wobei der zweite Wasserstoffdruck von dem Verkehrsmittel (4) an die Betankungseinrichtung (6) übertragen wird, und
wobei die Betankungseinrichtung (6) die Abweichung ermittelt (34).

7. Verfahren nach einem der vorhergehenden Ansprüche, ferner aufweisend
- Ausgeben (38) eines Warnsignals, falls die Abweichung einen zweiten Schwellenwert überschreitet, der höher ist als der erste Schwellenwert.

8. Verfahren nach einem der vorhergehenden Ansprüche,
wobei das Ermitteln (34) der Abweichung und das Ändern (36) der Sensorkennlinie nach dem Betankungsvorgang erfolgen.

9. System (2) zur Betankung eines Verkehrsmittels mit Wasserstoff, aufweisend:
- eine Betankungseinrichtung (6) mit einer Wasserstoffabgabeeinrichtung (8), einer ersten Verbindungseinheit (14), einem ersten Drucksensor (20) und einer ersten Steuereinheit (12),
- eine zweite Verbindungseinheit (16) und eine zweite Steuereinheit (18) zur Integration in ein Verkehrsmittel (4),
wobei der erste Drucksensor (20) mit der ersten Steuereinheit (12) gekoppelt ist und zum Erfassen eines ersten Wasserstoffdrucks eines durch die Wasserstoffabgabeeinrichtung (8) abgegebenen Wasserstoffstroms ausgebildet ist,
wobei die zweite Steuereinheit (18) dazu ausgebildet ist, einen von einem zweiten Drucksensor (22) in dem Verkehrsmittel (4) erfassten zweiten Wasserstoffdruck des Wasserstoffstroms oder eines Tanks (10) in dem Verkehrsmittel (4) aufzunehmen, und
wobei eine der ersten Steuereinheit (12) und der zweiten Steuereinheit (18) dazu ausgebildet ist, eine Abweichung zwischen dem ersten Wasserstoffdruck und dem zweiten Wasserstoffdruck zu ermitteln und eine Sensorkennlinie in dem Verkehrsmittel (4) zur Korrektur der Erfassung des zweiten Wasserstoffdrucks zu ändern, falls die Abweichung einen ersten Schwellenwert überschreitet.

10. System (2) nach Anspruch 9, wobei die eine der ersten Steuereinheit (12) und der zweiten Steuereinheit (18) dazu ausgebildet ist, ein Warnsignal auszugeben, falls die Abweichung einen zweiten Schwellenwert überschreitet, der höher ist als der erste Schwellenwert.

## Claims

1. Method for fuelling a means of transport (4) by means of a hydrogen fuelling device (6), having the steps of:
- establishing (24) a communication connection between the hydrogen fuelling device (6) and the means of transport (4),
- coupling (26) a hydrogen delivery device (8) to a tank (10) of the means of transport (4) and fuelling the means of transport (4),
- sensing (30) a first hydrogen pressure of a hydrogen stream delivered by the hydrogen delivery device (8) in the fuelling device (6) during fuelling (28),
- sensing (32) a second hydrogen pressure of the received hydrogen stream and/or of the tank (10) in the means of transport (4) during fuelling (28),
- determining (34) a deviation between the first hydrogen pressure and the second hydrogen pressure, and
- changing (36) a sensor characteristic curve in the means of transport (4) in order to correct the sensing of the second hydrogen pressure if the deviation exceeds a first threshold value.

2. Method according to Claim 1,
wherein the first and second hydrogen pressure is sensed (30, 32) once after fuelling (28) has been started.

3. Method according to Claim 1,
wherein the first and second hydrogen pressure is sensed (30, 32) multiple times and the deviation is determined (34) multiple times.

4. Method according to Claim 3,
wherein the determination (34) of the deviation and/or the sensing (30, 32) of the first and second hydrogen pressure is/are repeated after a predetermined waiting time has elapsed.

5. Method according to Claim 3 or 4,
wherein the determination (34) of the deviation is repeated after passing through a predetermined pressure change level.

6. Method according to one of the preceding claims,
wherein the second hydrogen pressure is transmitted from the means of transport (4) to the fuelling device (6), and
the fuelling device (6) determines (34) the deviation.

7. Method according to one of the preceding claims, further comprising
- outputting (38) a warning signal if the deviation exceeds a second threshold value that is higher than the first threshold value.

8. Method according to one of the preceding claims,
wherein the deviation is determined (34) and the sensor characteristic curve is changed (36) after the fuelling process.

9. System (2) for fuelling a means of transport with hydrogen, having:
- a fuelling device (6) comprising a hydrogen delivery device (8), a first connection unit (14), a first pressure sensor (20) and a first control unit (12),
- a second connection unit (16) and a second control unit (18) for integration into a means of transport (4),
wherein the first pressure sensor (20) is coupled to the first control unit (12) and is designed to sense a first hydrogen pressure of a hydrogen stream delivered by the hydrogen delivery device (8),
wherein the second control unit (18) is designed to receive, in the means of transport (4), a second hydrogen pressure of the hydrogen stream or of a tank (10) that is sensed by a second pressure sensor (22) in the means of transport (4), and
wherein one of the first control unit (12) and the second control unit (18) is designed to determine a deviation between the first hydrogen pressure and the second hydrogen pressure and to change a sensor characteristic curve in the means of transport (4) in order to correct the sensing of the second hydrogen pressure if the deviation exceeds a first threshold value.

10. System (2) according to Claim 9, wherein the one of the first control unit (12) and the second control unit (18) is designed to output a warning signal if the deviation exceeds a second threshold value which is higher than the first threshold value.

## Revendications

1. Procédé de ravitaillement d'un moyen de transport (4) par un dispositif (6) de ravitaillement en hydrogène, comprenant les étapes suivantes :
- établir (24) une liaison de communication entre le dispositif (6) de ravitaillement en hydrogène et le moyen de transport (4),
- relier (26) un dispositif (8) de distribution d'hydrogène à un réservoir (10) du moyen de transport (4) et ravitailler le moyen de transport (4),
- détecter (30), pendant le ravitaillement (28), une première pression d'hydrogène d'un flux d'hydrogène délivré par le dispositif (8) de distribution d'hydrogène dans le dispositif de ravitaillement (6),
- détecter (32), pendant le ravitaillement (28), une deuxième pression d'hydrogène du flux d'hydrogène reçu dans le moyen de transport (4) et/ou dans le réservoir (10) de ce moyen de transport (4),
- déterminer (34) une différence entre la première pression d'hydrogène et la deuxième pression d'hydrogène, et
- modifier (36) une courbe caractéristique de capteur dans le moyen de transport (4) afin de corriger la détection de la deuxième pression d'hydrogène si la différence dépasse une première valeur de seuil.

2. Procédé selon la revendication 1,
dans lequel la détection (30, 32) de la première et de la deuxième pression d'hydrogène est effectuée une seule fois après le début du ravitaillement (28).

3. Procédé selon la revendication 1,
dans lequel la détection (30, 32) de la première et de la deuxième pression d'hydrogène et la détermination (34) de la différence sont effectuées plusieurs fois.

4. Procédé selon la revendication 3,
dans lequel la détermination (34) de la différence et/ou la détection (30, 32) de la première et de la deuxième pression d'hydrogène sont répétées après l'écoulement d'un temps d'attente prédéterminé.

5. Procédé selon la revendication 3 ou la revendication 4,
dans lequel la détermination (34) de la différence est répétée après le passage d'un niveau de variation de pression prédéterminé.

6. Procédé selon l'une des revendications précédentes,
dans lequel la deuxième pression d'hydrogène est transmise par le moyen de transport (4) au dispositif de ravitaillement (6), et
le dispositif de ravitaillement (6) détermine la différence (34).

7. Procédé selon l'une des revendications précédentes, comprenant en outre
- l'émission (38) d'un signal d'avertissement si la différence dépasse une deuxième valeur de seuil supérieure à la première valeur de seuil.

8. Procédé selon l'une des revendications précédentes,
dans lequel la détermination (34) de la différence et la modification (36) de la courbe caractéristique de capteur sont effectuées après l'opération de ravitaillement.

9. Système (2) de ravitaillement en hydrogène d'un moyen de transport, comprenant :
- un dispositif de ravitaillement (6) comprenant un dispositif (8) de distribution d'hydrogène, une première unité de connexion (14), un premier capteur de pression (20) et une première unité de commande (12),
- une deuxième unité de connexion (16) et une deuxième unité de commande (18) pour l'intégration dans un moyen de transport (4),
le premier capteur de pression (20) étant relié à la première unité de commande (12) et étant conçu de façon à détecter une première pression d'hydrogène d'un flux d'hydrogène délivré par le dispositif (8) de distribution d'hydrogène,
la deuxième unité de commande (18) étant conçue de façon à recevoir une deuxième pression d'hydrogène du flux d'hydrogène ou d'un réservoir (10) dans le moyen de transport (4), détectée par un deuxième capteur de pression (22) dans le moyen de transport (4), et
l'une parmi la première unité de commande (12) et la deuxième unité de commande (18) étant conçue pour déterminer un écart entre la première pression d'hydrogène et la deuxième pression d'hydrogène et pour modifier une courbe caractéristique de capteur dans le moyen de transport (4) afin de corriger la détection de la deuxième pression d'hydrogène si la différence dépasse une première valeur de seuil.

10. Système (2) selon la revendication 9, dans lequel l'une parmi la première unité de commande (12) et la deuxième unité de commande (18) est adaptée pour émettre un signal d'alerte si la différence dépasse une deuxième valeur de seuil qui est supérieure à la première valeur de seuil.
